# EUROPÄISCHE PATENTSCHRIFT

(11) **EP 3 376 008 B1**
(45) Veröffentlichungstag und Bekanntmachung des Hinweises auf die Patenterteilung: **12.05.2021**
(21) Anmeldenummer: 18161649.1
(22) Anmeldetag: 14.03.2018
(51) Int. Cl.: F02D 41/18, F02D 41/00, F02D 41/14

(54) **VERFAHREN ZUM BESTIMMEN EINER LUFTMENGE IN EINEM BRENNRAUM EINES VERBRENNUNGSMOTORS UND VERBRENNUNGSMOTOR**
COMBUSTION ENGINE AND METHOD FOR DETERMINING A VOLUME OF AIR IN A COMBUSTION CHAMBER OF A COMBUSTION ENGINE
PROCÉDÉ DE DÉTERMINATION D'UNE QUANTITÉ D'AIR DANS UNE CHAMBRE DE COMBUSTION D'UN MOTEUR À COMBUSTION INTERNE ET MOTEUR À COMBUSTION INTERNE

(30) Priorität: 17.03.2017 DE 102017105853
(43) Veröffentlichungstag der Anmeldung: 19.09.2018
(73) Patentinhaber: VOLKSWAGEN AKTIENGESELLSCHAFT, 38440 Wolfsburg (DE)
(72) Erfinder: Heinken, Sebastian, 38106 Braunschweig (DE); Pankratz, Kirsten, 38100 Braunschweig (DE); Petersen, Lars, 38536 Meinersen (DE); Shurkewitsch, Andre, 38547 Calberlah (DE)
(74) Vertreter: MFG Patentanwälte Meyer-Wildhagen Meggle-Freund Gerhard PartG mbB

(56) Entgegenhaltungen:
- DE-A1- 10 006 127
- DE-A1- 10 122 456
- US-A1- 2007 295 067
- US-B1- 6 363 316

## Beschreibung

Die vorliegende Erfindung betrifft ein Verfahren zum Bestimmen einer Luftmenge in einem Brennraum eines Verbrennungsmotors, insbesondere eines Ottomotors mit Benzindirekteinspritzung. Die Erfindung betrifft weiterhin einen Verbrennungsmotor mit einer Steuerung, die dazu ausgebildet ist, ein solches Verfahren auszuführen. Weiterhin betrifft die Erfindung ein Fahrzeug mit einem solchen Verbrennungsmotor.

Bei Verbrennungsmotoren und insbesondere bei Ottomotoren wird die zur Verbrennung zugeführte Kraftstoffmenge in Abhängigkeit von einer angesaugten Luftmasse (Luftmenge) eingestellt. Die zugeführte Luftmenge wird über die sogenannte Drosselklappe eingestellt, die entsprechend einer Stellung des Gaspedals (Drehmomentwunsch des Fahrers) direkt oder über eine Steuerung eingestellt wird. Der Gaspedalstellung entspricht eine Soll-Luftfüllung im Brennraum, aus der eine Soll-Drosselklappenstellung ermittelt wird und die dann über eine Steuer-/Regelvorrichtung eingestellt wird. Die sich daraus ergebende Luftmenge im Brennraum (eines Zylinders) des Verbrennungsmotors wird über Sensoren und geeignete Steuerungsverfahren eingestellt.

Dabei wird für jedes Arbeitsspiel die vorhandene Luftmasse (im Brennraum) durch die Füllungserfassung bestimmt.

Bei einem System zur Füllungserfassung, dem sogenannten α-n-System, wird über ein Kennfeld in Abhängigkeit vom Drosselklappenwinkel α und der Drehzahl n der (Frischluft-)Volumenstrom bestimmt, der dann in einen tatsächlichen Luftmassenstrom umgerechnet wird.

Beim sogenannten p-n-System wird über ein Steuerungsmodell (z.B. ein Drosselklappenmodell) mithilfe des Druckgefälles über die Drosselklappe sowie der Temperaturen im Ansaugrohr und des Drosselklappenwinkels der Luftmassenstrom berechnet. Die angesaugte Frischluft (Luftmenge im Brennraum) wird dabei unter Berücksichtigung der Motordrehzahl n, dem Druck p im Saugrohr (vor dem Einlassventil), der Temperatur im Einlasskanal und weiteren Einflüssen

(Nockenwellen- und Ventilhubverstellung, Saugrohrumschaltung, Position der Ladungsbewegungsklappen) berechnet.

Bei einem weiteren Verfahren wird ein Heißfilm-Luftmassenmesser (HFM) eingesetzt, der den in das Saugrohr einströmenden Luftmassenstrom bestimmt.

Das α-n-System und das HFM-System, die jeweils nur den in durch das Saugrohr fließenden Massestrom bestimmen, liefern jedoch nur im stationären Motorbetrieb einen gültigen Wert für die tatsächliche Zylinderfüllung bzw. für die Luftmenge, die zur Verbrennung zur Verfügung steht. Bei einem Lastwechsel, d. h. bei einer plötzlichen Änderung des Drosselklappenwinkels, verändert sich der Massenstrom im Saugrohr sofort, während sich der in den Zylinder (Brennraum) eintretende Massenstrom und damit die Zylinderfüllung erst ändert, wenn sich der Saugrohrdruck erhöht oder erniedrigt hat.

Herkömmliche Ansätze zur Luftmassenbestimmung beim Lastwechsel beruhen darauf, dass zur zeitlich korrekten Bestimmung der Füllungseinflussgrößen die Dynamik des Lastauf- und -abbaus (Lastwechsels) verlangsamt (Verzögerung der Drosselklappenverstellung) wird, um die Luftmenge noch hinreichend genau bestimmen zu können. So eine Drosselklappenbewegungsverzögerung führt jedoch zu einem langsameren Lastaufbau (oder -abbau) des Fahrzeugs und damit zu einer unerwünschten verringerten Lastwechseldynamik.

Es gibt weiter Ansätze, diese verringerte Dynamik - insbesondere beim Beschleunigen - dadurch auszugleichen, dass durch Mehrfacheinspritzung von Kraftstoff die ungenau berechnete Luftmenge ausgeglichen wird. Dazu sind jedoch aufwändige Änderungen im Einspritzsteuerungssystem erforderlich.

Ein weiteres Problem besteht darin, dass die tatsächliche Ist-Luftfüllung im Brennraum erst nach dem Schließen des Einlassventils feststeht. Zu diesem Zeitpunkt ist jedoch die Kraftstoffeinspritzung in den Brennraum selbst (Direkteinspritzung) oder ins Saugrohr (Saugrohreinspritzung) bereits beendet, um eine gute Durchmischung des Luft-KraftstoffGemisches sicherzustellen. Bei der Saugrohreinspritzung ist die Einspritzung unter Umständen sogar bereits beendet, bevor das Einlassventil überhaupt öffnet.

Zur Lösung dieses Problems bei Saugrohreinspritzungssystemen beschreibt die DE 10 2005 059 436 A1 einen Ansatz, bei dem die Ist-Luftfüllung im Brennraum vorhergesagt (prädiziert) wird. Dazu gibt es den Ansatz, unter Verwendung eines Druckgradienten im Saugrohr und vorhergesagter Drosselklappenstellungen in mehreren Stufen den Saugrohrdruck zum Zeitpunkt des Schließens des Einlassventils und damit eine prädizierte Luftfüllung zu berechnen.

Ein verfeinerter Ansatz für Saugrohreinspritzsysteme beruht darauf, aus einer Soll-Größe (Soll-Luftfüllung) über den Lageregler der Drosselklappe eine Ist-Größe (Ist-Luftfüllung) herbeizuführen. Dabei wird eine im dynamischen Betrieb (beim Lastwechsel) einer Ist-Größe vorauseilende Soll-Größe für die Prädiktion der Ist-Größe verwendet. Das vorauseilende Signal wird durch Dämpfen und Verzögern in ein nachlaufendes Signal umgewandelt. Bei innerer Gemischbildung (bei Direkteinspritzung) ist es jedoch für die genaue Kraftstoffdosierung erforderlich, die vor der eigentlichen Einspritzung in der Brennkammer eingeschlossene Luftmenge möglichst exakt zu bestimmen, so dass eine hohe Lastwechseldynamik realisierbar ist

DE 101 22 456 A1 und US 6 363 316 B1 beschreiben jeweils ein Verfahren zur Steuerung eines Verbrennungsmotors mit mindestens einem Einlassluftmengen-Stellglied zur prädikativen Regelung der Einlassluftmenge basierend auf einem Luftmengenmodell.

Diese Aufgabe wird durch das erfindungsgemäße Verfahren gemäß Anspruch 1 und den Verbrennungsmotor gemäß Anspruch 9 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Das erfindungsgemäße Verfahren zum Bestimmen einer Luftmenge in einem Brennraum eines Verbrennungsmotors mit Kraftstoffeinspritzung, insbesondere in einem

Lastwechselbetriebszustand, zeichnet sich durch die Schritte aus:
- Synchronisieren eines Drosselklappensollwertsignals mit einem
- Betriebszustandskriterium,
- Bestimmen einer Verlaufsdynamik der Drosselklappenstellung unter Berücksichtigung des synchronisierten Drosselklappensollwertsignals,
- Bestimmen einer Ist-Luftmengengröße (Saugrohrdruck) zu einem Ist-Zeitpunkt,
- Bestimmen eines Soll-Zeitpunkts, der nach dem Ist-Zeitpunkt liegt,
- Prädizieren einer weiteren Luftmengengröße für den Soll-Zeitpunkt und
- Bestimmen einer Gesamtluftmengengröße aus der Ist-Luftmengengröße und aus der weiteren Luftmengengröße für den Soll-Zeitpunkt.

Durch die Synchronisierung des Drosselklappensollwertsignals, das aus einem Fahrerwunsch (Fahrpedalstellung) abgeleitet wird, mit einem Betriebszustandskriterium, kann eine bessere Anpassung an den Betriebszustand bzw. an den Takt des Motors erreicht werden. Das Sollwertsignal rückt zum einen zeitlich näher an ein entsprechendes Stellungssignal des Fahrpedals, so dass die Verzögerung zwischen diesen beiden Signalen verringert wird. Gleichzeitig wird das Sollwertsignal mit dem Betriebszustand des Verbrennungsmotors synchronisiert, so dass das Sollwertsignal immer in gewünschter zeitlicher Relation zu einem bestimmten Motortakt berücksichtigt wird.

Davon ausgehend wird dann eine tatsächliche Verlaufsdynamik der Drosselklappenstellung unter Berücksichtigung des synchronisierten Drosselklappensollwertsignals bestimmt. Diese Verlaufsdynamik ist dann ebenfalls immer mit dem Betriebszustandskriterium synchronisiert, so dass bei der späteren steuerungs-/regelungstechnischen Berücksichtigung diese Verlaufsdynamik ebenfalls "im Takt" mit dem Motor ist.

Zur eigentlichen Bestimmung der Luftmenge wird dann zunächst eine Ist-Luftmengengröße zu einem Ist-Zeitpunkt t₀ bestimmt. Von diesem Zeitpunkt t₀ ausgehend wird ein danach liegender Soll-Zeitpunkt t₀+Δt bestimmt. Der Soll-Zeitpunkt ist dabei der Zeitpunkt, für den die relevante Luftmengengröße bestimmt werden soll. Dieser Zeitpunkt liegt aber zum Bestimmungszeitpunkt t₀ (Ist-Zeitpunkt) noch in der Zukunft. Daher wird dann im nächsten Schritt eine weitere Luftmengengröße für den Soll-Zeitpunkt prädiziert, und anschließend wird die Gesamtluftmengengröße aus der Ist-Luftmengengröße und der weiteren Luftmengengröße für den Soll-Zeitpunkt (beispielsweise dem Einspritzzeitpunkt) bestimmt. Durch dieses Verfahren ist es nicht mehr erforderlich, einen Steller für die Drosselklappe im Lastwechselbetrieb (auch transienter Betrieb) zu verzögern, um eine maximale Dynamik beim Lastab- bzw. -aufbau zu realisieren. Durch die Synchronisierung und die kombinierte Bestimmung der Luftmenge aus einer Ist-Luftmenge und einer weiteren (prädizierten) Luftmengengröße wird die Luftmenge im Brennraum mit einer hinreichenden Genauigkeit bestimmt. Die Genauigkeit ist einfach skalierbar, indem der Prädiktionsschritt eine je nach verfügbarer Rechenleistung beliebig skalierbare Diskretisierung der Verlaufsdynamik der Drosselklappenstellung berücksichtigt. Das Verfahren ist auf einfache Weise mit den bekannten Verfahren und insbesondere mit dem p-n-bzw. dem HFM-System zu kombinieren.

Dabei umfasst das Betriebszustandskriterium, mit dem das Drosselklappensollwertsignal synchronisiert ist, eine Kurbelwellenstellung und/oder ine Einlassventilstellung Insbesondere die Einlassventilstellung ist wesentlich für die im Brennraum verfügbare Luftmenge.

Es gibt Verfahren, bei denen das Bestimmen der Ist-Luftmengengröße das Messen eines Saugrohrdrucks p_{SR} und/oder eines Luftmassenstroms ṁ_{SR} umfasst. Beide Messgrößen stehen in unmittelbarem Zusammenhang mit der in den Brennraum einströmenden Luftmenge. Die Verwendung des Saugrohrdrucks ist dabei insofern attraktiv, dass der Saugrohrdruck besonders einfach und schnell bestimmbar ist und so für dynamische Berechnungen, die für zylindertaktgenaue Bestimmung der Luftmenge wünschenswert sind, Vorteile bietet.

Es gibt Verfahren, bei denen das Prädizieren der weiteren Luftmenge das Prädizieren einer Drosselklappenstellung zu einem ersten und einem zweiten Prädiktionszeitpunkt t₁ und t₂ umfasst, das Prädizieren einer ersten Luftmengengröße zum ersten Prädiktionszeitpunkt und das Prädizieren wenigstens einer zweiten Luftmengengröße zum zweiten Prädiktionszeitpunkt und das Bestimmen der weiteren Luftmengengröße aus der ersten und zweiten Luftmengengröße anhand eines Behältermodells.

Da der Drosselklappensollwert (im Idealfall eine Sprungfunktion) durch die Systemträgheiten nicht mit dem tatsächlichen Drosselklappenverlauf übereinstimmt, wird die Prädiktion verbessert, indem man wenigstens an zwei diskreten Punkten die tatsächliche Drosselklappenstellung (z. B. mit einem steuerungstechnisch abgebildeten Drosselklappenmodell) prädiziert und auch jeweils zu diesen Prädiktionszeitpunkten eine erste und eine zweite Luftmengengröße bestimmt. Mithilfe eines Behältermodells, welches den Brennraum (bzw. den relevanten Füllraum) abbildet bzw. modelliert, kann dann aus dieser ersten und zweiten oder aber auch aus mehreren Luftmengengrößen die weitere (prädizierte) Luftmengengröße bestimmt werden. Die Genauigkeit des Modellierungsanteils (prädizierten Anteils) wird damit deutlich verbessert.

Die weitere Luftmengengröße kann dabei eine prädizierte Druckdifferenz und/oder eine prädizierte Luftmassenstromdifferenz sein.

Dabei gibt es Verfahren, bei denen das Behältermodell einen Brennraum und/oder einen Einspritzraum des Ottomotors zum Prädiktionszeitpunkt abbildet. Bei der äußeren Gemischbildung (System mit Saugrohreinspritzung) wird das System Saugrohr-Zylinderbrennraum zu berücksichtigen sein, während bei der inneren Gemischbildung (System mit Direkteinspritzung) der Brennraum des Zylinders zum Einspritzzeitpunkt zu modellieren ist.

Dabei gibt es Verfahren, bei denen das Prädizieren der weiteren Luftmengengröße unter Berücksichtigung eines Kennfelds mit festen und/oder variablen Daten, eines

Berechnungsalgorithmus und/oder Betriebszustandsgrößen des Ottomotors erfolgt. Damit können beispielsweise die Prädiktionswerte an den Betriebszustand des Motors angepasst werden (die Diskretisierungsintervalle für die Bestimmung der prädizierten Luftmengengrößen können dabei beispielsweise mit zunehmender Drehzahl verringert oder mit abnehmender Drehzahl auch erhöht werden).

Es ist so auch möglich, bei einer Beendigung des Lastwechsels in einem stationären Betrieb die Bestimmung der Luftmenge völlig ohne Prädiktionsanteil durchzuführen.

Dabei gibt es Verfahren, bei denen die Bestimmung des Soll-Zeitpunkts und/oder des Prädiktionszeitpunkts unter Berücksichtigung einer drehzahlabhängigen Zeitdifferenz erfolgt.

Es gibt Verfahren, bei denen die Luftmenge für einen Brennraum mit Kraftstoffdirekteinspritzung bestimmt wird. Das oben dargestellte erfindungsgemäße Verfahren ist besonders geeignet für die innere Gemischbildung mit Direkteinspritzung, da in der eigentlichen Brennkammer kaum eine Messung der eigentlichen Luftmenge möglich ist und daher der Prädiktionsanteil für die Luftmengenbestimmung besonders wichtig und hilfreich ist.

Ein Verbrennungsmotor mit einer Steuerung, die dazu ausgebildet ist, ein Verfahren in der oben beschriebenen Weise auszuführen, erlaubt eine hohe Lastwechseldynamik, ohne dass dabei die Nachteile einer ungenauen Kraftstoffbemessung in Kauf genommen werden müssen. Vielmehr können Vorteile wie Verbrauchsoptimierung, Schadstoffoptimierung, Verringerung von Zündaussetzern realisiert werden.

Ausführungsbeispiele der Erfindung werden nun beispielhaft und unter Bezugnahme auf die beigefügte Zeichnung beschrieben. Dabei zeigt:
- Fig. 1: einen Verbrennungsmotor 100, der geeignet ist, das erfindungsgemäße Verfahren auszuführen,
- Fig. 2: eine schematische Darstellung einer elektronischen Motorleistungssteuerung für den in Fig. 1 dargestellten Verbrennungsmotor zur Ausführung des erfindungsgemäßen Verfahrens,
- Fig. 3: ein Diagramm, welches schematisch den Synchronisierungsschritt des erfindungsgemäßen Verfahrens erläutert,
- Fig. 4: ein Diagramm, welches schematisch den Modellierungsschritt einer Verlaufsdynamik der Drosselklappenstellung illustriert,

- Fig. 5: eine schematische Darstellung der Prädiktion einer weiteren Luftmengengröße und
- Fig. 6: eine schematische Darstellung der diskreten Bestimmung einer ersten und einer zweiten Luftmengengröße zeigt; und
- Fig. 7: ein schematisches Ablaufdiagramm des erfindungsgemäßen Verfahrens.

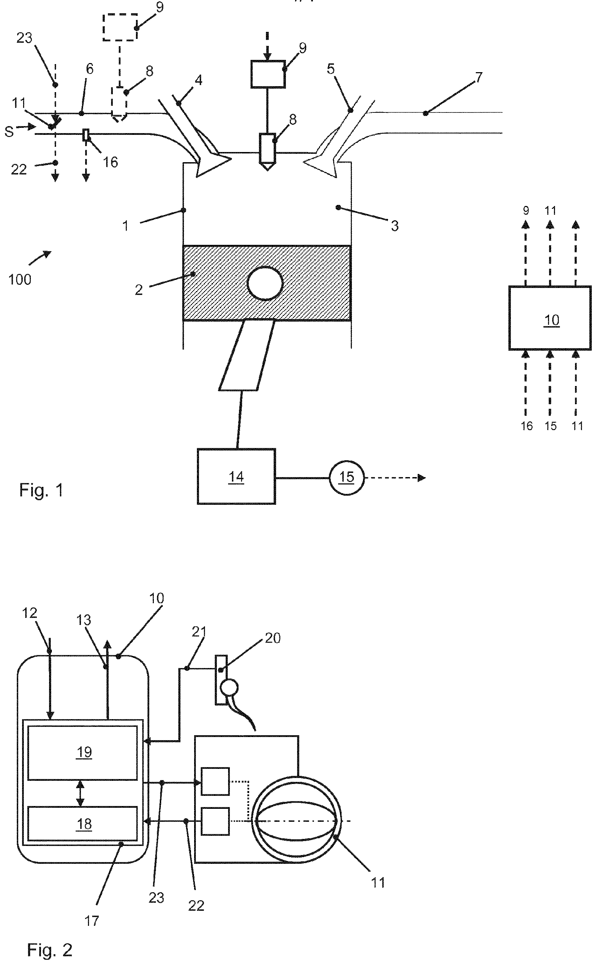

Fig. 1 zeigt schematisch einen Verbrennungsmotor 100 mit innerer Gemischbildung (Direkteinspritzung) und alternativ mit äußerer Gemischbildung (Saugrohreinspritzung, gestrichelte Darstellung). Gezeigt ist einer von mehreren Zylindern 1 mit dem Kolben 2, die den Brennraum 3 definieren. Der Brennraum 3 wird durch ein Einlassventil 4 und ein Auslassventil 5 wahlweise verschlossen oder mit dem Saugrohr 6 bzw. mit dem Abgasrohr 7 verbunden.

In den Brennraum 3 mündet der Einspritzer 8, der über ein Stellelement 9 betätigt wird und Kraftstoff direkt in den Brennraum einspritzt. Dazu erhält das Stellelement 9 Steuersignale von einer Motorsteuerung 10.

Optional kann der Einspritzer 8 mit dem Stellelement 9 auch in das Saugrohr 6 münden (gestrichelte Darstellung). Dann handelt es sich um einen Motor 100 mit äußerer Gemischbildung und Saugrohreinspritzung.

Im Saugrohr 6 ist die Drosselklappe 11 angeordnet, die über die Motorsteuerung 10 Steuersignale 12 erhält und Stellungssignale 13 abgibt. Die Drosselklappe 11 regelt dabei den Luftmassenstrom S, der über das Ansaugrohr 6 in den Brennraum 3 geführt wird. Die durch die Verbrennung bewirkte Kolbenbewegung wird über die Kurbelwelle 14 aufgenommen, und ein Drehzahlsensor 15 übermittelt die Motordrehzahl n an die Motorsteuerung 10. Über einen Detektor 16, der als Drucksensor und/oder Massenstromsensor ausgebildet ist, wird der Saugrohrdruck p_{SR} bzw. ein Luftmassenstrom ṁ_{SR} erfasst und ebenfalls als ein entsprechendes Signal an das Motorsteuergerät 10 geliefert.

Die Ansteuerung der Drosselklappe 7 ist anhand von Fig. 2 verständlich. Die Motorsteuerung 10 umfasst eine Steuer-/Regelungseinheit 17 mit einem Überwachungsmodul 18 und einer Rechnereinheit 19. Die Einheit 17 empfängt Signale von Sensoren und gibt Signale an Aktoren ab. So wird beispielsweise das Stellungssignal 21 einer Fahrpedalstellung von einem Fahrpedalmodul 21 abgegeben und in der Steuer-/Regelungseinheit 17 verarbeitet, so dass diese ein Drosselklappenstellsignal 23 an die Drosselklappe 11 abgibt, die wiederum ein Stellungssignal 22 an die Einheit 17 abgibt. Die Drosselklappenstellung wird also von der Steuer-/Regelungseinheit 17 der Motorsteuerung 10 eingestellt und überwacht.

Das erfindungsgemäße Verfahren hat wesentliche Teilschritte:

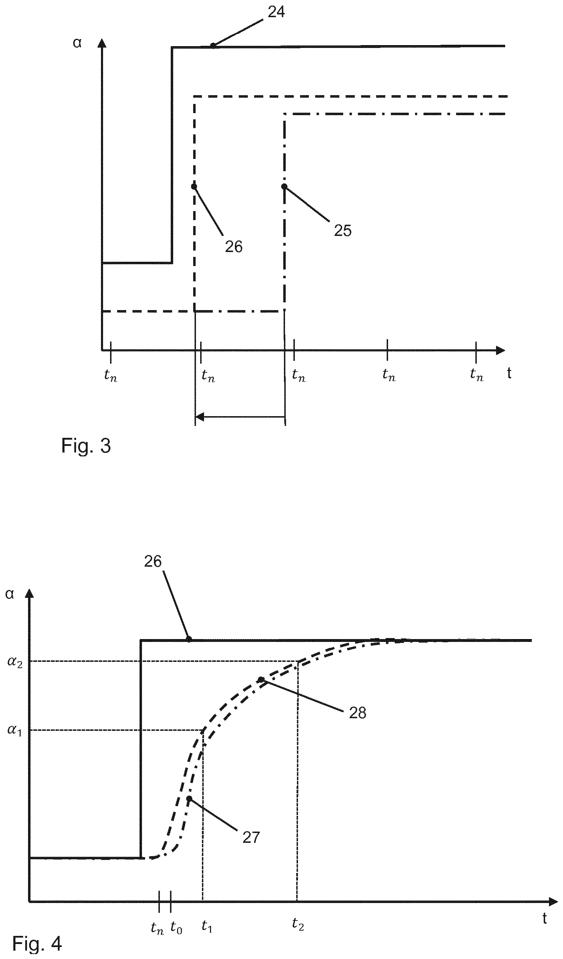

Fig. 3 zeigt einen Synchronisierungsschritt, bei dem das Diagramm folgende Signalverläufe über die Zeit t zeigt: einen Verlauf der Fahrpedalstellung 24, der einen Fahrerwunsch kennzeichnet, und ein Drosselklappensollwertsignal 25 (ursprünglich), welches aus dem Verlauf der Fahrpedalstellung folgt - jeweils als Winkel α aufgetragen. Auf der Zeitachse sind jeweils die Zeitpunkte tₙ dargestellt, die jeweils den Beginn eines Ansaugtakts kennzeichnen. Im Verfahren wird nun das ursprüngliche Drosselklappensollwertsignal 25 zeitlich nach vorne (Pfeilrichtung) verschoben, so dass es jeweils unmittelbar vor einem Ansaugtaktzeitpunkt tₙ liegt. Dieses synchronisierte oder getaktete Drosselklappensollwertsignal 26 wird für das weitere Verfahren verwendet.

Fig. 4 zeigt dafür eine Modellierung des tatsächlichen Drosselklappenstellungsverlaufs (Drosselklappendynamik), die aus dem synchronisierten Drosselklappensollwertverlauf 26 abzuleiten ist. Durch die Trägheiten im System ist der tatsächliche Drosselklappenverlauf im Diagramm durch die Kurve 27 angegeben, der vom Drosselklappensollwertverlauf 26 abweicht. In einem Rechenverfahren oder mithilfe von Kenndaten wird dann ein Drosselklappenverlauf 28 modelliert (gestrichelte Darstellung), der für die weitere Berechnungen genutzt wird. Mithilfe des modellierten Drosselklappenverlaufs 28 können zu bestimmten Zeitpunkten t₁ und t₂ Drosselklappenpositionen (Öffnungswinkel α₁ und α₂ bestimmt werden (unterschiedliche Öffnungswinkel der Drosselklappe und damit unterschiedliche Druckverläufe über die Drosselklappe).

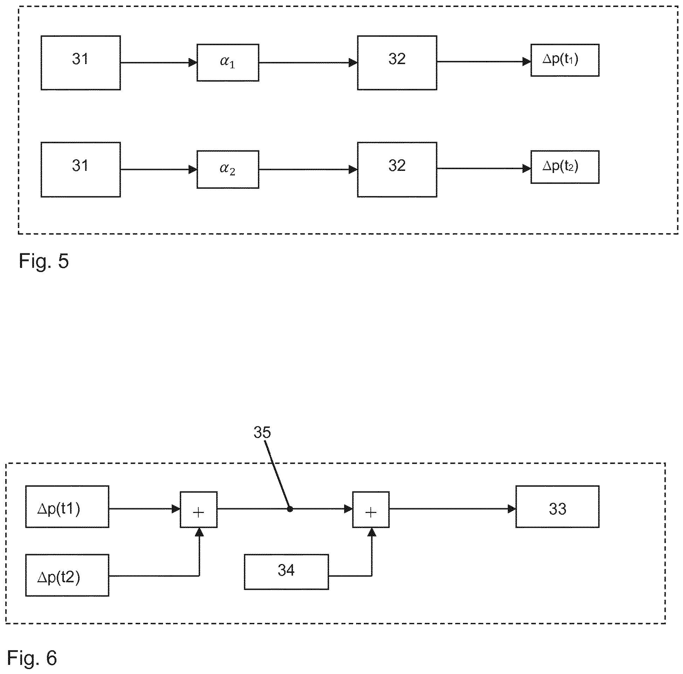

Fig. 5 zeigt den Verfahrensablauf, bei dem in einem ersten Schritt mithilfe eines Drosselklappenmodells die Drosselklappenposition α₁ bestimmt wird, die dann in einem Druckbehältermodell 32 zu einem Prädiktionsdruck Δp(t₁) führt. In einem nächsten Schritt wird das Gleiche zu einem Zeitpunkt t₂ für eine zweite Drosselklappenposition α₂ ermittelt. Hier ergibt sich ein Δp(t₂), das ebenfalls einem prädizierten Druckwert entspricht.

Fig. 6 zeigt die Bestimmung einer Gesamtluftmengengröße 33, die sich aus den prädizierten Druckgrößen Δp(t₁) und Δp(t₂) sowie aus einer Ist-Luftmengengröße 34 (hier der IST-Druck p_{IST}) ergibt, die mithilfe des Detektors 16 bestimmt wird. Dabei werden die Druckgrößen Δp(t₁), Δp(t₂) und p_{IST} aufsummiert.

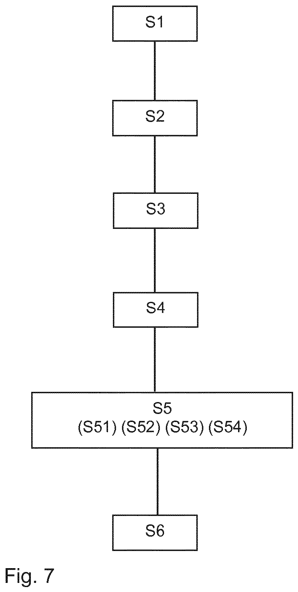

Fig. 7 zeigt ein Ausführungsbeispiel des gesamten erfindungsgemäßen Verfahrensablaufs mit den Schritten:
- S1: Synchronisieren eines Drosselklappensollwertsignals 25, 26 mit einem Betriebszustandskriterium tₙ (z. B. Ansaugtakt des nächsten Zylinders/Kurbelwellenstellung);
- S2: Bestimmen/Modellieren einer Verlaufsdynamik 28 der Drosselklappenstellung unter Berücksichtigung des synchronisierten Drosselklappensollwertsignals 26;
- S3: Bestimmen einer Ist-Luftmengengröße (pₛᵣ) 34 zu einem IST-Zeitpunkt t₀;
- S4: Bestimmen eines Sollzeitpunkts t₀+Δt;
- S5: Prädizieren einer weiteren Luftmengengröße (Δp, Δṁ) für den Sollzeitpunkt (t₀+Δt);
- S6: Bestimmen einer Gesamtluftmengengröße 33 aus der IST-Luftmengengröße 34 und der weiteren Luftmengengröße für den Sollzeitpunkt (t₀+Δt).

Dabei kann der Schritt S5 weitere optionale Schritte umfassen (in der Figur in Klammern eingetragen):
- S51: Prädizieren einer Drosselklappenstellung α₁; α₂ zu einem ersten und einem zweiten Prädiktionszeitpunkt t1; t2;
- S52: Prädizieren einer ersten Luftmengengröße Δp(t₁) zum ersten Prädiktionszeitpunkt t₁;
- S53: Prädizieren wenigstens einer zweiten Luftmengengröße Δp(t₁) zum zweiten Prädiktionszeitpunkt t₂;
- S54: Bestimmen der weiteren Luftmengengröße anhand eines Behältermodells 32.

Weitere Variationen und Ausführungsbeispiele der Erfindung ergeben sich für den Fachmann aus den Ansprüchen.

### Bezugszeichenliste

- 100: Verbrennungsmotor
- 1: Zylinder
- 2: Kolben
- 3: Brennraum
- 4: Einlassventil
- 5: Auslassventil
- 6: Ansaugrohr
- 7: Abgasrohr
- 8: Einspritzer
- 9: Stellelement
- 10: Motorsteuerung/ Motorsteuergerät
- 11: Drosselklappe
- 12: Steuersignal
- 13: Stellsignale
- 14: Kurbelwelle
- 15: Drehzahlsensor
- 16: Detektor
- 17: Steuer-/Regelungseinheit
- 18: Überwachungsmodul
- 19: Rechnereinheit
- 20: Fahrpedalmodul
- 21: Stellungssignal
- 22: Drosselklappenstellungssignal
- 23: Drosselklappenstellsignal
- 24: Verlauf der Fahrpedalstellung
- 25: ursprüngliches Drosselklappensollwertsignal
- 26: synchronisiertes Drosselklappensollwertsignal
- 27: realer Drosselklappenverlauf
- 28: modellierter Drosselklappenstellungsverlauf
- 31: Drosselklappenmodell
- 32: Druckbehältermodell
- 33: Gesamtluftmengengröße
- 34: Ist-Luftmengengröße (P_{SR}; ṁ_{SR})
- 35: weitere Luftmengengröße
- t₀: Ist-Zeitpunkt
- t₀+Δt: Sollzeitpunkt
- tₙ: Betriebszustandskriterium
- t₁; t₂: Prädiktionszeitpunkt
- α₁; α₂: Drosselklappenstellung

## Patentansprüche

1. Verfahren zum Bestimmen einer Luftmenge in einem Brennraum (3) eines Verbrennungsmotors (100) mit Kraftstoffeinspritzung, insbesondere in einem Lastwechselbetriebszustand, mit:
Synchronisieren eines Drosselklappensollwertsignals (25, 26) mit einem Betriebszustandskriterium (tₙ), wobei das Betriebszustandskriterium (tₙ) eine Kurbelwellenstellung und/oder eine Einlassventilstellung umfasst;
Bestimmen einer Verlaufsdynamik (28) der Drosselklappenstellung unter Berücksichtigung des synchronisierten Drosselklappensollwertsignals (26);
Bestimmen einer Ist-Luftmengengröße (34) zu einem IST-Zeitpunkt (t₀);
Bestimmen eines Sollzeitpunkts (t₀+Δt);
Prädizieren einer weiteren Luftmengengröße (35) für den Sollzeitpunkt (t₀+Δt);
Bestimmen einer Gesamtluftmengengröße (33) aus der IST-Luftmengengröße (34) und der weiteren Luftmengengröße (35) für den Sollzeitpunkt (t₀+Δt).

2. Verfahren nach Anspruch 1, wobei das Bestimmen der Ist-Luftmengengröße (34) das Messen eines Saugrohrdrucks (p_{SR}) und oder eines Luftmassenstroms (ṁ_{SR}) umfasst.

3. Verfahren nach Anspruch 1 oder 2, wobei das Prädizieren der weiteren Luftmengengröße (35) umfasst:
Prädizieren einer Drosselklappenstellung (α₁, α₂) zu einem ersten und einem zweiten Prädiktionszeitpunkt (t₁; t₂);
Prädizieren einer ersten Luftmengengröße (Δp(t₁)) zum ersten Prädiktionszeitpunkt
(t₁); Prädizieren wenigstens einer zweiten Luftmengengröße (Δp(t₂)) zum zweiten Prädiktionszeitpunkt (t₂) anhand eines Behältermodells (32) und;
Bestimmen der weiteren Luftmengengröße (35).

4. Verfahren nach einem der Ansprüche 1 bis 3, wobei die weitere Luftmengengröße (35) eine prädizierte Druckdifferenz und/oder eine prädizierte Luftmassenstromdifferenz umfasst.

5. Verfahren nach Anspruch 3 oder 4, wobei das Behältermodell (32) einen Brennraum (3) und/oder einen Einspritzraum des Ottomotors (100) zum Sollzeitpunkt (t₀ + Δt) abbildet.

6. Verfahren nach einem der Ansprüche 1 bis 5, wobei das Prädizieren der weiteren Luftmengengröße (35) unter Berücksichtigung eines Kennfelds mit festen und/oder variablen Daten, eines Berechnungsalgorithmus und/oder Betriebszustandsgrößen des Ottomotors (100) erfolgt.

7. Verfahren nach einem der Ansprüche 1 bis 6, wobei die Bestimmung des Sollzeitpunkts (t₀ + Δt) und/oder des Prädiktionszeitpunktes unter Berücksichtigung einer drehzahlabhängigen Zeitdifferenz (Δt) erfolgt.

8. Verfahren nach einem der Ansprüche 1 bis 6, wobei die Luftmenge für einen Brennraum (3) mit Kraftstoffdirekteinspritzung bestimmt wird.

9. Verbrennungsmotor (100) mit einer Steuerung (10), die dazu ausgebildet ist, ein Verfahren nach einem der vorhergehenden Ansprüche auszuführen.

## Claims

1. A method for determining an air volume in a combustion chamber (3) of a combustion engine (100) with fuel injection, in particular in a load cycle operating state, comprising:
Synchronizing a throttle valve setpoint signal (25, 26) with an operating state criterion (tₙ), wherein the operating state criterion (tₙ) comprises a crankshaft position and/or an intake valve position;
Determining profile dynamics (28) of the throttle valve position in consideration of the synchronized throttle valve setpoint signal (26);
Determining an actual air volume variable (34) at an ACTUAL time point (t₀);
Determining a target time point (t₀+Δt);
Predicting an additional air volume variable (35) for the target time point (t₀+Δt);
Determining a total air volume variable (33) from the ACTUAL air volume variable (34) and the additional air volume variable (35) for the target time point (t₀+Δt).

2. The method according to Claim 1, wherein the determination of the actual air volume variable (34) comprises measuring an intake manifold pressure (p_{SR}) and/or an air mass flow (ṁSR).

3. The method according to Claim 1 or 2, wherein the prediction of the additional air volume variable (35) comprises:
Predicting a throttle valve position (α₁, α₂) at a first and a second prediction time point (t₁; t₂);
Predicting a first air volume variable (Δₚ(t₁)) at a first prediction time point (t₁);
Predicting at least a second air volume variable (Δₚ(t₂)) at a second prediction time point (t₂) on the basis of a container model (32); and
Determining the additional air volume variable (35).

4. The method according to one of Claims 1 to 3, wherein the additional air volume variable (35) comprises a predicted pressure difference and/or a predicted air mass flow difference.

5. The method according to Claim 3 or 4, wherein the container model (32) depicts a combustion chamber (3) and/or an injection chamber of the gasoline engine (100) at the target time point (t₀ + Δt).

6. The method according to one of Claims 1 to 5, wherein the additional air volume variable (35) is predicted in consideration of a characteristic map with fixed and/or variable data, of a calculation algorithm and/or of operating state variables of the gasoline engine (100).

7. The method according to one of Claims 1 to 6, wherein the target time point (t₀ + Δt) and/or the prediction time point is determined in consideration of a speed-dependent time difference (Δt).

8. The method according to one of Claims 1 to 6, wherein the air volume is determined for a combustion chamber (3) with direct fuel injection.

9. A combustion engine (100) having a control (10) which is designed to carry out a method according to one of the preceding claims.

## Revendications

1. Procédé de détermination d'une quantité d'air dans une chambre de combustion (3) d'un moteur à combustion interne (100) comprenant une injection de carburant, en particulier dans un état de fonctionnement à alternance de charge, comprenant :
la synchronisation d'un signal de consigne de papillon des gaz (25, 26) avec un critère d'état de fonctionnement (tₙ), dans lequel le critère d'état de fonctionnement (tₙ) comprend une position de vilebrequin et/ou une position de soupape d'admission ;
la détermination d'une dynamique d'évolution (28) de la position de papillon des gaz en tenant compte du signal de consigne de papillon des gaz (26) synchronisé ;
la détermination d'une grandeur réelle de quantité d'air (34) à un moment réel (t₀) ;
la détermination d'un moment de consigne (t₀+Δt) ;
la prédiction d'une autre grandeur de quantité d'air (35) pour le moment de consigne (t₀+Δt) ;
la détermination d'une grandeur de quantité d'air totale (33) à partir de la grandeur de quantité d'air réelle (34) et de l'autre grandeur de quantité d'air (35) pour le moment de consigne (t₀+Δt).

2. Procédé selon la revendication 1, dans lequel la détermination de la grandeur de quantité d'air réelle (34) comprend la mesure d'une pression de tuyau d'aspiration (p_{SR}) et/ou d'un débit massique d'air (ṁ_{SR}).

3. Procédé selon la revendication 1 ou 2, dans lequel la prédiction de l'autre grandeur de quantité d'air (35) comprend :
la prédiction d'une position de papillon des gaz (α₁, α₂) à un premier et un second moment de prédiction (t₁ ; t₂) ;
la prédiction d'une première grandeur de quantité d'air (Δₚ(t₁)) au premier moment de prédiction (t₁) ;
la prédiction d'au moins une seconde grandeur de quantité d'air (Δₚ(t₂)) au second moment de prédiction (t₂) à l'aide d'un modèle de récipient (32) et ;
la détermination de l'autre grandeur de quantité d'air (35).

4. Procédé selon l'une quelconque des revendications 1 à 3, dans lequel l'autre grandeur de quantité d'air (35) comprend une différence de pression prédite et/ou une différence de débit massique d'air prédite.

5. Procédé selon la revendication 3 ou 4, dans lequel le modèle de récipient (32) représente une chambre de combustion (3) et/ou une chambre d'injection du moteur à essence (100) au moment de consigne (t₀ + Δt).

6. Procédé selon l'une quelconque des revendications 1 à 5, dans lequel la prédiction de l'autre grandeur de quantité d'air (35) est effectuée en tenant compte d'un diagramme caractéristique comprenant des données fixes et/ou variables, d'un algorithme de calcul et/ou de grandeurs d'état de fonctionnement du moteur à essence (100).

7. Procédé selon l'une quelconque des revendications 1 à 6, dans lequel la détermination du moment de consigne (t₀ + Δt) et/ou du moment de prédiction est effectuée en tenant compte d'une différence temporelle (Δt) dépendant du régime.

8. Procédé selon l'une quelconque des revendications 1 à 6, dans lequel la quantité d'air pour une chambre de combustion (3) est déterminée avec une injection directe de carburant.

9. Moteur à combustion interne (100) pourvu d'une commande (10) conçue pour réaliser un procédé selon l'une quelconque des revendications précédentes.
